Europäisches Patentamt

European Patent Office

Office européen des brevets

(19)

(11) Veröffentlichungsnummer: **0 204 124**
**B1**

# (12) EUROPÄISCHE PATENTSCHRIFT

(45) Veröffentlichungstag der Patentschrift: 02.01.91

(21) Anmeldenummer: 86105643.0

(22) Anmeldetag: 23.04.86

(51) Int. Cl.⁵: **G 01 D 5/16, H 01 C 10/44**

(54) **Linearpotentiometer für Wegmessung.**

(30) Priorität: 03.05.85 DE 3515880
05.10.85 DE 3535587

(43) Veröffentlichungstag der Anmeldung:
10.12.86 Patentblatt 86/50

(45) Bekanntmachung des Hinweises auf die
Patenterteilung:
02.01.91 Patentblatt 91/01

(84) Benannte Vertragsstaaten:
AT CH DE FR GB IT LI NL

(56) Entgegenhaltungen:
DE-A-3 342 492
US-A-2 506 482
US-A-3 588 779
US-A-3 996 550

(73) Patentinhaber: **Hehl, Karl**
**Arthur-Hehl-Strasse 32**
**D-7298 Lossburg 1 (DE)**

(72) Erfinder: **Hehl, Karl**
**Arthur-Hehl-Strasse 32**
**D-7298 Lossburg 1 (DE)**

(74) Vertreter: **Mayer, Friedrich, Dr.**
**Patentanwälte Dr. F. Mayer Dipl.-Phys. G. Frank**
**Westliche 24**
**D-7530 Pforzheim (DE)**

Courier Press, Leamington Spa, England.

## Beschreibung

Die Erfindung bezieht sich auf einen Linearpotentiometer entsprechend dem Oberbegriff des Patentanspruches 1.

Bei den üblichen Linearpotentiometern dieser Art (z.B. Prospekt der Novo-Technik KG, Offterdinger GmbH & Co., Horbstraße 12, D-7302 Ostfildern 1) ist der Schlitten aus dem Schlittenkörper, gesonderten Führungsstegen, einer Verankerungsplatte für das Gelenk und einem gesonderten, an der Verankerungsplatte befestigten, deckelartigen Gehäuse für das Gelenk sowie einem besonderen Leitorgan für die Führung des Deckbandes im Schlitten aufgebaut. Um Spannungen und übermäßige Friktionen der aus Kunststoff bestehenden Führungsstege in ihren Führungsbahnen zu vermeiden, ist einer der beiden Führungsstege um eine Längsachse des metallenen Schlittenkörpers schwenkbar gelagert. Bei einem solchen Aufbau repräsentiert der Schlitten eine verhältnismäßig große Masse, die bei Betrieb des Linearpotentiometers rhythmisch abgebremst und beschleunigt werden muß. Solche Linearpotentiometer zeichnen sich zwar durch eine hohe Meßgenauigkeit auch bei hohen Schleifergeschwindigkeiten aus. Es hat sich jedoch gezeigt, daß die Präzision der Messungen absinkt, wenn das Linearpotentiometer über lange Zeiträume bei intensivem Betrieb extremen Belastungen ausgesetzt ist. Dies ist insbesondere bei starken Vibrationen der Baugruppen und bei erzwungenen Relativbewegungen zwischen Gehäuse und Schlitten der Fall, welche Relativbewegungen von der Schlittenachse abweichen. Dies gilt aber auch bei häufigem Stoß und Schlag, zum Beispiel infolge umsachgemäßer Behandlung, was vor allem bei Exporten in industriell wenig entwickelte Länder vorkommen kann.

Bei den beschriebenen üblichen Linearpotentiometern ist der Aufbau des Schlittens aus mehreren Teilen, die teilweise aus Kunststoff, teilweise aus Metall bestehen, die Voraussetzung für eine weitgehende Abschirmung der empfindlichen Schleifkontakte im Gehäuse gegen Schmutz.

Die Abdeckung des vom Schlittenkörper durchsetzten Längsschlitzes wird dabei dadurch erreicht, daß ein außerhalb des Gehäuses angeordnetes metallenes Lagerteil für das Gelenk des Schlittens auf die Verankerungsplatte des Schlittens aufgeschraubt und das den Längsschlitz abdeckende Abdeckband zwischen den miteinander verschraubten Bauteilen hindurchgeführt wird. Die Ausbildung der Führungsstege als gesonderte, am metallenen Schlittenkörper teils gelenkig befestigte Kunststoffelemente soll ein spannungsfreies Gleiten dieser Führungsstege in den Führungsschultern des Gehäuses sicherstellen. Insoweit ist der mehrteilige und mehrstoffliche Aufbau des bekannten Schlittens teils montagebedingt, teils funktionsbedingt. Er führt jedoch zu den oben geschilderten Beeinträchtigungen hinsichtlich der Meßgenauigkeit bei langjähriger intensiver Benutzung, insbesondere bei zusätzlicher Beanspruchung durch Stoß und Schlag.

Es ist auch bekannt (FR—PS 2.142.129) ein Linearpotentiometer vollkommen staub- und feuchtigkeitsdicht auszubilden. Dieses Linearpotentiometer ist indessen nicht zur Messung der Relativbewegung zweier Baugruppen einer Arbeitsmaschine ausgelegt, weshalb eine Verbindung des auf der einen Baugruppe angeordneten Schlittens mit der anderen Baugruppe über ein Gelenk nicht erforderlich ist. Insoweit besteht der Zwang für einen mehrteiligen Aufbau des Schlittens nicht. Dennoch sind bei diesem Linearpotentiometer das außerhalb des Gehäuses gelegene Teil des Schlittens und das im Innenraum angeordnete Bauteil des Schlittens je durch gesonderte Formstücke gebildet. Diese Formstücke sind zwar fest miteinander verbunden, weisen jedoch je eigene Führungsorgane auf, die in unterschiedlicher Höhe im Gehäuse geführt sind.

Ausgehend von dem genannten Stand der Technik liegt der Erfindung die Aufgabe zugrunde, den Schlitten für das Linearpotentiometer im Kontext seines durch ein Rohrprofil gebildeten metallenen Gehäuses und des aus Federstahl bestehenden Abdeckbandes so zu gestalten, daß Führungsstege, Schlittenkörper, Verankerungsplatte und die Wandungen für die Kammer für das Gelenk sowie die Leitorgane für die Führung des Abdeckbandes durch einen einzigen durch Spritzguß hergestellten Kunststoff-Formstück gebildet werden können, um dadurch die Meßgenauigkeit auch unter den oben geschilderten, ungünstigen Bedingungen über lange Zeiträume hinweg auf einem hohen Niveau zu halten.

Diese Aufgabe wird erfindungsgemäß durch die im Kennzeichen des Patentanspruches 1 genannten Merkmale gelöst.

Bei einer solchen Ausbildung, die das Gewicht des Schlittens im Vergleich zum Schlitten des gattungsgemäßen Linearpotentiometers um das mehrfache verringert, wird eine Konstanz der räumlichen Verhältnisse zwischen den Führungsstegen und dem Schlittenkörper spritzgußtechnisch gewährleistet. Auch werden die bei den gattungsgemäßen Linearpotentiometern erforderlichen Fertigungsschritte beim Zusammenbau des Schlittens und die diesbezüglichen Fertigungstoleranzen und Maßabweichungen ausgeschaltet. Dies gilt insbesondere auch für das konstante räumliche Verhältnis zwischen der das Gelenk aufnehmenden Kammer des Schlittens einerseits und den Führungsstegen des Schlittens und somit dem diese Führungsstege führenden Gehäuse. Da dieses Gehäuse aus Metall gefertigt ist, gleiten Kunststofflächen der Führungsstege auf Metallflächen des Gehäuses, was das Gleiten des Schlittens wesentlich erleichtert und begünstigt. Im Mittelabschnitt a—a des Schlittenkörpers sind an dessen Unterseite Befestigungsflächen 20b für die Schleifer angeformt, so daß eine bei gattungsgemäßen Linearpotentiometern mit metallenen Schlittenkörpern erforderlicher isolierende Trägerplatte für die Schleiferkontakte entbehrlich ist.

Schließlich ist darauf hinzuweisen, daß auch eine einzige Durchtrittsöffnung in dem außerhalb des Gehäuses befindlichen Teil des Schlittens für die Hindurchführung des Abdeckbandes genügen würde, wenn die Kammer für das Gelenk im Mittelabschnitt a—a des Schlittenkörpers brückenartig über der Verankerungsplatte unter Bildung dieser Durchtrittsöffnung angeordnet wäre.

Nachstehend wird die Erfindung anhand der Zeichnung an einem Ausführungsbeispiel erläutert.

Es zeigen:

Fig. 1 das Linearpotentiometer in Seitenansicht mit längsgeschnittenem Gehäuse,

Fig. 2 das Linearpotentiometer in Draufsicht,

Fig. 3 einen Schnitt nach Linie III von Fig. 1 in vergrößerter Darstellung,

Fig. 4 das Linearpotentiometer in Stirnansicht mit Steckeinrichtung,

Fig. 5 einen Schnitt nach Linie V—V von Fig. 1 in vergrößerter Darstellung,

Fig. 6 den Schlitten des Linearpotentiometer in Unteransicht mit Schleifer,

Fig. 7 den Deckel des Schlittens im Vertikalschnitt,

Fig. 8 den länggeschnittenen Schlitten in Seitenansicht mit Gelenk für die Verbindung zur zweiten Baugruppe,

Fig. 9 den Schlitten ohne Deckel und

Fign. 10, 11 den Deckel des Schlittens und den Schlitten als solchen je in perspektivischer Darstellung stark vergrößert.

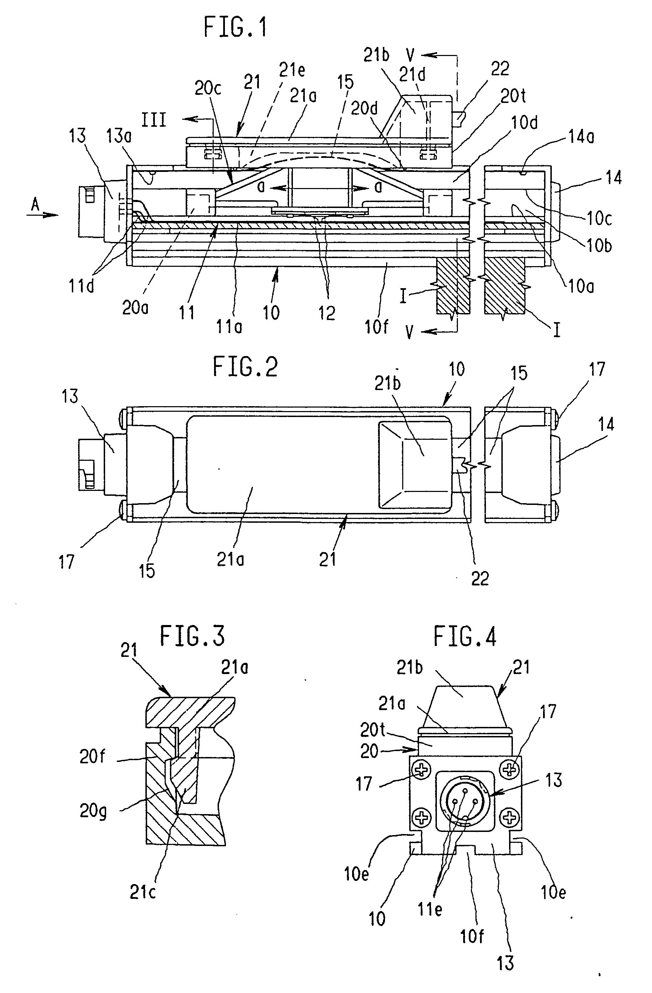

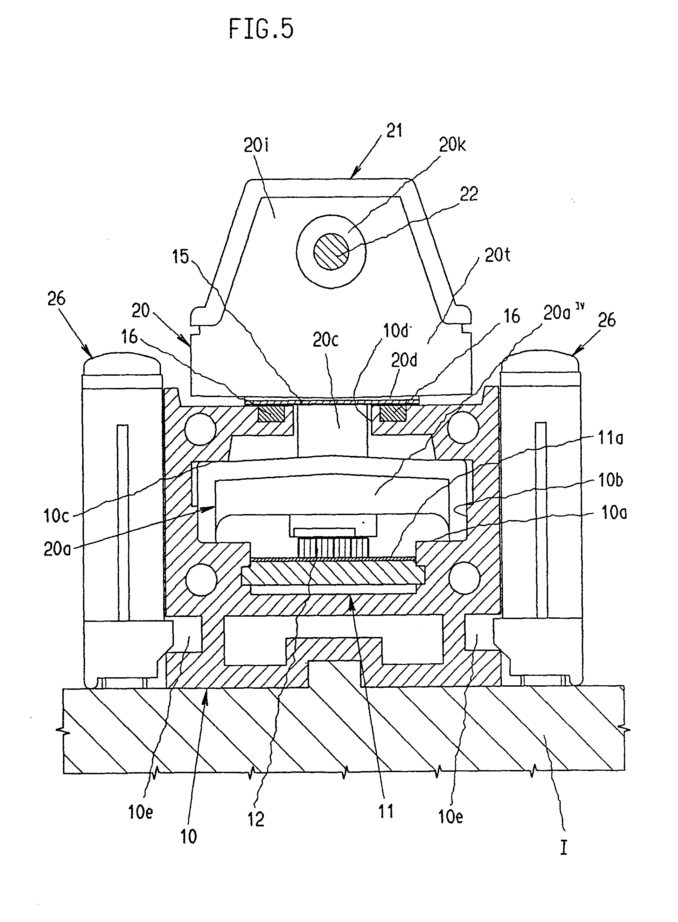

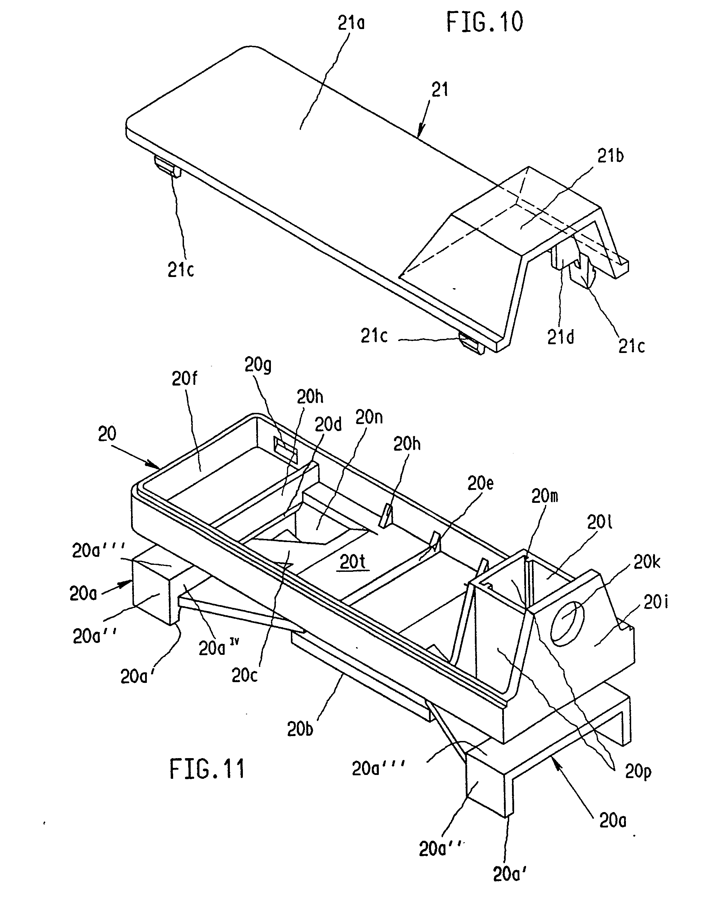

Das Linearpotentio-meter für Wegmessung ist insbesondere zur Steuerung der Relativbewegung zwischen Baugruppen an einer Arbeitsmaschine, z.B. einer Kunststoff-Spritzgießmaschine geeignet. Es umfaßt ein langgestrecktes, durch ein Rohrprofil von etwa rechteckigem Querschnitt gebildetes Gehäuse 10, das mit Längsnuten 10e für den Eingriff einer Befestigungseinrichtung 26 versehen ist, die das Gehäuse 10 mit der einen Baugruppe I verbindet. Ein Schlitten 20 für die die Spannung abtastenden Schleifer 12 ist über ein Gelenk G mit der anderen Baugruppe II verbunden. Die vom Schleifer 12 abgetastete Abtastfläche 11a (Widerstandsbahn und Kollektorbahn) ist in einem bandförmigen Träger 11 angeordnet, wie insbesondere aus den Figuren 1 und 5 ersichtlich. Der Schlitten ist mit horizontalen, im Abstand voneinander befindlichen Führungsstegen 20a an einer inneren Führungsbahn mit Führungsschultern 10a, 10b, 10c des Gehäuses 10 gleitbar gelagert. Der die Führungsstege 20a verbindende Schlittenkörper 20c durchgreift einen mittigen Längsschlitz 10d des Gehäuses 10 mit seinem Mittelabschnitt a—a. Dieser Bereich wird im folgenden als Durchgriffsbereich bezeichnet. Die Führungsstege 20a weisen vertikale und horizontale Führungsflächen 20a', 20a'', 20a''' auf. Über dem Durchgriffsbereich verbreitert sich der in Seitenansicht trapezförmige Schlittenkörper 20c quer zur Laufrichtung de Schlittens zu einer Verankerungsplatte 20t für das Gelenk G. Der Längsschlitz 10d ist mit Hilfe eines durch magnetische Leisten 16 gehaltenen Abdeckbandes 15 aus Federstahl abgedeckt. Die Verankerungsplatte 20t unterläuft das Abdeckband 15 und hebt dieses geringfügig von den Leisten 16. Die Führungsstege 20a und der Schlittenkörper 20c mit Verankerungsplatte 20t sind durch ein gegossenes Formstück aus hochpolymerem Werkstoff gebildet. Die Verankerungsplatte 20t ist in Gleitrichtung über den Durchgriffsbereich a—a hinaus verlängert und in den Verlängerungsabschnitten 20u; 20v mit Durchtrittsöffnungen 20n für das Deckband 15 versehen. Die Verlängerungsabschnitte 20u; 20v erstrecken sich bis in den Bereich der Führungsstege 20a. Die verlängerte Verankerungsplatte 20t ist mit einem umlaufenden Versteifungsrand 20f versehen. Das freie Ende eines Verlängerungsabschnittes 20v bildet eine Kammer 20l für das Gelenk G, die von vertikalen Wandungen (Kammerwandungen 20i, 20p) der Verankerungsplatte 20t begrenzt ist. Diese Wandungen überragen den Versteifungsrand 20f der Verankerungsplatte 20t. Die stirnseitige Wandung 20i ist Teil des Versteifungsrandes 20f im stirnseitigen Abschnitt. Die zur Kammerwandung 20i parallele rückseitige Kammerwandung 20p ist mit einer gehärteten Anlageplatte (Gelenkplatte 25) armiert. An der Gelenkplatte 25 liegt das kugelkalottenartig ausgebildete Ende des Verbindungsbolzens 22 an. Der Verbindungsbolzen 22 durchsetzt dank der Bohrung 20k die Kammerwandung 20i mit Spiel und ist durch eine Schraubenfeder 23 axial belastet. Die Schraubenfeder 23 ist zwischen der stirnseitigen Kammerwandung 20i und einer Widerlagerscheibe 24 angeordnet. Die Verbindungsstange 22 mit Außengewinde und einem Schlitz 22a für einen Schraubenzieher durchdringt die Schraubenfeder 23 und die Widerlagerscheibe 24 mit Spiel, die an einem Radialflansch 22c abgestützt ist. Dank des kugelkalottenartigen Endes 22b hat das Gelenk 22—24 die Eigenschaft eines Kugelgelenks. Darüberhinaus sind aber auch Relativbewegungen zwischen der Verbindungsstange 22 und dem Schlitten in einer radialen Ebene möglich, da die lichte Weite der Schraubenfeder 23 und der Bohrung in der Widerlagerscheibe 24 wesentlich größer ist als der Durchmesser der Verbindungsstange 22 und andererseits die plane Oberfläche der Gelenkplatte 25 an dem kugelkalottenartigen Ende 22b verschieblich anliegt. Die Widerlagerscheibe 24 und damit mittelbar auch die Schraubenfeder 23 sind auf einer horizontalen Längsrippe 20r des Kammerbodens abgestützt. Führungsflächen 20a', 20a'' und 20a''' der Führungsstege 20a sind an Führungsschultern 10a, 10b, 10c des Gehäuses 10 geführt (Fig. 11 in Verbindung mit Fign. 1, 5). Die Schleifer 12 sind an Befestigungsflächen 20b (Fig. 11) angeordnet. Die Abtastflächen 11a des Trägers 11 sind über elektrische Anschlüsse 11d der Steckeinrichtung des Endstückes 13 verbunden, welches das Gehäuse stirnseitig abschließt und mittels Haltenase 13a gesichert ist. Die gegenüberliegende Stirnseite des Gehäuses 10 ist mittels Endstück 14 abgedeckt und durch die Haltenase 14a gesichert. Mit 20e ist eine quer verlaufende Gleitrippe an der Verankerungsplatte 20t für das Abdeckband 15 und mit 20h eine Versteifungsrippe der Verankerungsplatte 20t bezeichnet.

Die Verankerungsplatte 20t ist mit Deckel 21 abgedeckt, der einen an die stirnseitige Kammerwand 20i anschließenden haubenartigen Bereich 21b und einen plattenförmigen Bereich 21a umfaßt. Der Deckel 21 ist mit dem Versteifungsrand 20f der Plattform 20 mittels elastischer Zun-gen 21c verbindbar, die in Vertiefungen 20g dieses Versteifungsrandes 20f einrastbar sind, wie insbesondere aus Fig. 3 ersichtlich. Dieser Deckel 21 hat für die Wegmessung keine funktionelle Bedeutung.

Die Gelenkplatte 25 ist über vertikale Führungsnuten 20m (Fig. 11) in Arbeitsposition einschieb-bar mit deren Hilfe gehalten. Die Endstücke 13, 14 sind mittels Befestigungsschrauben mit dem Gehäuse 10 verbunden.

Die Widerlagerplatte ist zwischen den Kammer-wandungen 20p weitgehend festgelegt. Gelenk-platte 25, Widerlagescheibe 24 und Schraubenfeder 23 bilden daher eine Bewegungseinheit, die radial zur Verbindungsstange 22, d.h. zur anderen Baugruppe II bweglich ist.

Eine Zentrierrippe der Baugruppe I taucht zur Zentrierung des Gehäuses 10 in deren Zentriernut 10f ein (Fig. 4).

Bei Relativbewegungen zwischen der Verbindungsstange 22 und dem Schlitten, die senkrecht zur Bewegungsrichtung des Schlittens verlaufen, ergeben sich daher Gleitbewegungen zwischen der Widerlagerscheibe 24 und dem Radialflansch 22c sowie zwischen dem kugelkalottenförmigen Ende der Verbindungsstange 22 und der Gelenkplatte 22b.

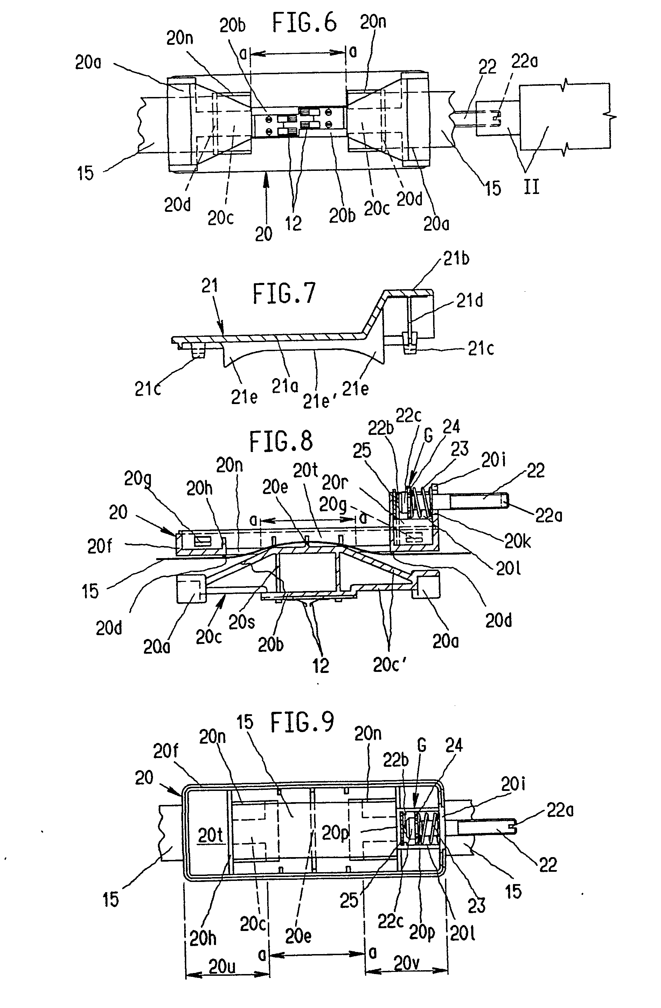

Wie insbesondere aus Fig. 6 und 8 ersichtlich, ist der Versteifungsrand 20c', ausgehend von der im Grundriß rechteckigen Befestigungsfläche 20b beidseits in Schlittenlängsrichtung auf die Breite der Führungsstege zunehmend verbreitert. Der Grundriß dieses Versteifungsrandes 20c' in dem sich verbreiternden Abschnitt zwischen der Befestigungsfläche 20b und den Führungsstegen 20a entspricht je der geometrischen Grundform eines Trapezes. Die Führungsstege 20a weisen einen U-förmigen Querschnitt auf und sind mit einer vertikalen, inneren Versteifungswand versehen, in welche der verbreiterte Versteifungsrand 20c' einmündet, wie insbesondere aus Fig. 11 ersichtlich.

Wie insbesondere aus Fig. 7 erkennbar, ist an der Unterseite des Deckels 21 in seiner parallel zum Längsschlitz 10d des Gehäuses 10 verlaufenden Symmetrieebene eine Leitrippe 21d für das Abdeckband 15 angeformt. Die Leitkante 21e' weist einen mittleren, horizontalen Abschnitt und kreisbogenförmige Endabschnitte auf. Diese Endabschnitte erstrecken sich über die Durchtrittsöffnungen 20n hinweg. Durch die Leitrippe 21d wird einerseits eine Versteifung des Deckels 21 bzw. eine weitere Materialeinsparung und Gewichtsverminderung im Gefolge einer durch die Versteifung möglichen 'Abmagerung' des Deckels und andererseits eine wesentliche Erleichterung bei der Montage des Linearpotentiometers erreicht. Denn das bei der Montage zwischen Verankerungsplatte 20t und der Oberfläche des Gehäuses 10 eingeführte Abdeckband 15 wird mit Hilfe der Leitkante 21e' und einer Abstützrippe 21d je durch die benachbarte Durchtrittsöffnung 20n über die Verankerungsplatte 20t und durch die andere Durchtrittsöffnung 20n nach unten geleitet. Unter-halb des Verlängerungsanschnittes 20u der Veran-kerungsplatte 20t kommt das Abdeckband 15 dann auf der Oberfläche des Gehäuses in Auflage.

Die Integration aller wesentlichen Funktionen des Schlittens 20 in ein einziges, die Führungsstege 20a, den Schlittenkörper 20c und die Verankerungsplatte 20t für das Gelenk G umfassendes gegossenes Formstück wird dadurch möglich, daß das Abdeckband 15 über wenigstens eine Durchtrittsöffnung 20n mittels Leitorgan durch das Formstück geführt wird. Da die Masse des Schlit-tens bei jeder Messung, d.h. bei jeder Relativbewegung zwischen den Baugruppen auf Null abgebremst und danach wieder beschleunigt werden muß, wird z.B. bei Spritzgußmaschinen durch die Gewichtsverminderung des Schlittens das Gelenk G erheblich geschont, insbesondere wenn Messungen bei jedem Spritzzyklus erfolgen, als in Millionen von Arbeitsspielen anfallen.

**Patentansprüche**

1. Linearpotentiometer für Wegmessung, insbe-sondere zur Steuerung der Relativbewegung zwischen zwei Baugruppen (I; II) einer Spritzgießmaschine z.B. einer Kunststoff-Spritzgießmaschine,

mit einem an der einen Baugruppe (I in Fig. 1 und 5) befestigbaren, als Gehäuse (10) dienenden Rohrprofil aus Metall von etwa rechteckigem Querschnitt, das in seiner oberen Wandung einen symmetrisch zu einer vertikalen Symmetrieebene (a—a in Fig. 1, 6, 8 und 9) angeordneten Längsschlitz (10d) aufweist,

mit einem über ein Gelenk (G) mit der anderen Baugruppe (II in Fig. 6) verbindbaren Schlitten (20), der den die Spannung abtastenden Schleifer (12) trägt, und der mit Hilfe horizontaler, im Abstand voneinander befindlicher Führungsstege (20a) an Führungsschultern (10a, 10b, 10c in Fig. 1, 5) des Gehäuses (10) gleitbar gelagert ist, und

mit einem Abdeckband (15) aus Federstahl, das auf der oberen Wandung des Gehäuses (10) zur Abdeckung des Längsschlitzes (10d) aufliegt und mit Hilfe von Permanentmagneten (16) des Gehäu-ses (10) gehalten ist,

wobei ein die Führungsstege (20a) verbindender Schlittenkörper (20c) den Längsschlitz (10d) im Mittelabschnitt (a—a in Fig. 1, 6, 8, 9) nach oben durchgreift und über dem Längsschlitz (10d) eine sich quer zur Symmetrieebene (a—a) ersteckende horizontale Verankerungsplatte (20t) für das Gelenk (G) bildet, das vom Abdeckband (15) wenigstens teilweise überfahrbar ist,

dadurch gekennzeichnet, daß an die aus einem hochpolymerem Werkstoff bestehende Verankerungsplatte (20t) Wandungen (20i, 20p) für eine Kammer (20l) zur Aufnahme des Gelenkes (G) angeformt sind,

daß die Verankerungsplatte (20t) wenigstens eine Durchtrittsöffnung (20n) für das Abdeckband (15) aufweist, welche Durchtrittsöffnung (20n) einerseits von einer Wandung der Kammer (20l) und andererseits von einem dem Durchtrittsbereich (a—a) entsprechenden Abschnitt (a—a in Fig. 8) der Verankerungsplatte (20t) begrenzt ist,

wobei die aus einem hochpolymerem Werkstoff bestehenden Führungsstege (20a) einstückig mit der Verankerungsplatte (20t) sind.

2. Linearpotentiometer nach Patentanspruch 1, dadurch gekennzeichnet, daß die Verankerungsplatte (20t) beidseits über den Durchgriffsbereich (a—a) hinaus in Gleitrichtung des Schlittens verlängert und in den Verlängerungsabschnitten (20u, 20v) je mit einer Durchtrittsöffnung (20n) für das Abdeckband (15) versehen ist (Fig. 8, 9).

3. Linearpotentiometer nach Patentanspruch 2, dadurch gekennzeichnet, daß die Verankerungsplatte beidseits bis in die Bereiche der Führungsstege (20a) verlängert und mit einem umlaufenden Versteifungsrand (20f) versehen ist, wobei an das freie Ende des einen Verlängerungsabschnittes (20v) die Wandungen (20i, 20p) für die Kammer (20l) angeformt sind.

4. Linearpotentiometer nach Patentanspruch 3, dadurch gekennzeichnet, daß die vertikalen Wandungen (20i, 20p) den vertikalen Versteifungsrand (20f) nach oben überragen und die rückseitige Kammerwandung (20p) mit einer gehärteten, in vertikalen Führungsnuten (20m) der Kammerwandung (20p), gehalterten Gelenkplatte (25) armiert ist, an welcher das Ende (22b) eines die stirnseitige Kammerwandung (20i) mit Spiel durchsetzenden Verbindungsbolzens (22) unter der Wirkung einer vorgespannten Schraubenfeder (23) anliegt.

5. Linearpotentiometer nach Patentanspruch 4, dadurch gekennzeichnet, daß die Schraubenfeder (23) an einer durch den Verbindungsbolzen (22) mit Spiel umschließenden und an einem Radialflansch des Verbindungsbolzens (22) abgestützen Widerlagerscheibe (24) sowie an der Kammerwandung (20i) abgestützt ist und auf einer horizontalen Längsrippe (20r) des Kammerbodens aufsitzt.

6. Linearpotentiometer nach einem der Patentansprüche 3—5, dadurch gekennzeichnet, daß die stirnseitige Kammerwandung (20i) und die Stirnkante des benachbarten Führungssteges (20a) in einer gemeinsamen vertikalen Ebene liegen.

7. Linearpotentiometer nach einem der vorhergehenden Patentansprüche, dadurch gekennzeichnet, daß der Schlittenkörper (20c) durch eine vertikale, trapezförmige Platte gebildet ist, welche mit einem Versteifungsrand (20c') versehen ist, der seinerseits die Befestigungsfläche (20b) für den Schleifer (12) bildet und der ausgehend von dieser Befestigungsfläche (20b) beidseits in Schlittenlängsrichtung auf die Breite der Führungsstege (20a) verbreitert ist.

8. Linearpotentiometer nach einem der Patentansprüche 3—7, dadurch gekennzeichnet, daß die Verankerungsplatte (20t) mittels Deckel (21) abgedeckt ist, der einen die Kammer (20l) abdeckenden dachförmigen Bereich (21b) und einen plattenförmigen Bereich (21a) umfaßt und der mit der Verankerungsplatte (20t) mittels Zungen (21c) verbindbar ist, die in Vertiefungen (20g) des Versteifungsrandes (20f) einrastbar sind sowie mittels Abstützrippen (21d in Fig. 1, 7, 10) an Wandungen (20p) der Kammer (20l) zentrierbar ist.

9. Linearpotentiometer nach Patentanspruch 8, dadurch gekennzeichnet, daß an der Unterseite des Deckels (21) in der Symmetrieebene (a—a) eine Leitrippe (21e) für das Abdeckband (15) angeformt ist, deren Leitkante (21e') einen mittleren, horizontalen Abschnitt und kreisbogenförmige Endabschnitte aufweist, wobei an der Verankerungsplatte (20t), in deren Mitte, eine senkrecht zur Laufrichtung des Schlittens (20) verlaufende Gleitrippe (20e) angeformt ist.

10. Linearpotentiometer nach einem der vorhergehenden Patentansprüche, dadurch gekennzeichnet, daß die Führungsstege (20a) U-förmigen Querschnitt aufweisen und mit einer vertikalen, quer zur Laufrichtung des Schlittens (20) liegenden Versteifungswand versehen sind, in welcher der Versteigungsrand (20t') einmündet.

**Revendications**

1. Potentiomètre linéaire pour la mesure de positions, en particulier pour commander le déplacement relatif entre deux blocs (I; II) d'une machine de moulage par injection, par exemple d'une machine de moulage par injection de matière plastique,

comprenant un profilé tubulaire en métal à section transversale sensiblement rectangulaire qui peut être fixé à l'un des blocs (I sur les figures 1 et 5), qui sert de boîtier (10) et qui présente dans sa paroi supérieure une fente longitudinale (10d) disposée symétriquement par rapport à un plan de symétrie vertical,

comprenant un curseur (20) qui peut être relié à l'autre bloc (II sur la figure 6) par l'intermédiaire d'une articulation (G), qui porte le balai de palpage du courant (12) et qui est monté glissant sur des épaulements de guidage (10a, 10b, 10c sur les figures 1, 5) du boîtier (10) à l'aide de traverses de guidage horizontales (20a) situées à distance l'une de l'autre,

et comprenant und bande de recouvrement (15) en acier à ressort qui repose sur la paroi supérieure du boîtier (10) pour recouvrir la fente longitudinale (10d) et qui est maintenue à l'aide d'aimants permanents (16) du boîtier (10),

cependant qu'un corps de curseur (20c) reliant les traverses de guidage (20a) traverse vers le haut la fente longitudinale (10d) dans la partie centrale (a—a sur les figures 1, 6, 8, 9) et forme au-dessus de la fente longitudinale (10d) und plaque d'ancrage horizontale (20t) pour l'articulation (G) qui s'étend transversalement par rapport au plan de symétrie et sur laquelle la bande de recouvrement (15) peut passer, du moins partiellement,

caractérisé par le fait que des parois (20i, 20p) prévues pour une chambre (20l) destinée à recevoir l'articulation (G) sont formées sur la plaque d'ancrage (20t) composée d'une matière en haut polymère,

et par le fait que la plaque d'ancarge (20t) présente au moins une ouverture de passage (20n) pour la bande de recouvrement (15), ladite ouverture de passage (20n) étant limitée d'un côté par une paroi de la chambre (20l) et de l'autre côté par une partie centrale (a—a sur la figure 8) de la plaque d'ancrage (20t) correspondant à la zone de traversée,

les traverses de guidage (20a) composées d'une matière en haut polymère étant d'un seul tenant avec la plaque d'ancrage (20t).

2. Potentiomètre linéaire selon la revendication 1, caractérisé par le fait que la plaque d'ancrage (20t) est prolongée des deux côtés dans la direction de glissement du curseur, au-delà de la zone de traversée, et qu'elle est munie dans chaque partie de prolongement (20u, 20v) d'une ouverture de passage (20n) destinée à la bande de recouvrement (15) (figures 8, 9).

3. Potentiomètre linéaire selon la revendication 2, caractérisé par le fait que la plaque d'ancrage est prolongée des deux côtés jusque dans la région des traverses de guidage (20a), et qu'elle est munie d'un bord de raidissement continu (20f), les parois (20i, 20p) prévues pour la chambre (20l) étant formées sur l'extrémité libre de l'une (20v) des parties de prolongement.

4. Potentiomètre linéaire selon la revendication 3, caractérisé par le fait que les parois verticales (20i, 20p) dépassent vers le haut le bord vertical de raidissement (20f), et que la paroi arrière (20p) de la chambre est armée au moyen d'une plaque d'articulation durcie (25) qui est maintenue dans des rainures de guidage verticales (20m) de la paroi (20p) de la chambre et sur laquelle l'extrémité (22b) d'un boulon de liaison (22) qui traverse avec un jeu la paroi (20i) de la chambre située du côté frontal repose sous l'effet d'un ressort hélicoïdal précomprimé (23).

5. Potentiomètre linéaire selon la revendication 4, caractérisé par le fait que le ressort hélicoïdal (23) est appuyé sur une rondelle de butée (24) qui entoure avec un jeu le boulon de liaison (22) et qui s'appuie sur une bride radiale du boulon de liaison (22), ainsi que sur la pacoi (20i) de la chambre, et qu'il repose sur une nervure longitudinale horizontale (20r) du fond de la chambre.

6. Potentiomètre linéaire selon l'une des revendications 3 à 5, caractérisé par le fait que la paroi (20i) de la chambre qui est située du côté frontal et le bord frontal de la traverse de guidage voisine (20a) sont situés dans un plan vertical commun.

7. Potentiomètre linéaire selon l'une des revendications précédentes, caractérisé par le fait que le corps (20c) du curseur est formé par une plaque verticale en forme de trapèze munie d'un bord de raidissement (20c') qui forme pour sa part la surface de fixation (20b) destinée au balai (12) et qui, en partant de cette surface de fixation (20b), est élargi des deux côtés dans a direction longitudinale du curseur jusqu'à la largeur des traverses de guidage (20a).

8. Potentiomètre linéaire selon l'une des revendications 3 à 7, caractérisé par le fait que la plaque d'ancrage (20t) est recouverte au moyen d'un couvercle (21) qui comprend une région en forme de toit (21b) recouvrant la chambre (20l) et une région en forme de plaque (21a), qui peut être relié à la plaque d'ancrage (20t) au moyen de pattes (21c) pouvant être encliquettées dans des enfoncements (20g) du bord de raidissement (20f) et qui peut être en outre centré sur des parois (20p) de la chambre (20l) au moyen de nervures d'appui (21d sur les figures 1, 7, 10).

9. Potentiomètre linéaire selon la revendication 8, caractérisé par le fait qu'est formée sur la face inférieure du couvercle (21), dans le plan de symétrie, une nervure de guidage (21e) qui est destinée à la bande de recouvrement (15) et dont le bord de guidage (21e') présente une partie centrale horizontale et des parties d'extrémité en forme d'arcs de cercle, une nervure de glissement (20e) étant formée sur la plaque d'ancrage (20t), en son milieu, en s'étendant perpendiculairement à la direction de déplacement du curseur (20).

10. Potentiomètre linéaiire selon l'une des revendications précédentes, caractérisé par le fait que les traverses de guidage (20a) présentent une section transversale en forme de U, et qu'elles sont munies d'une paroi de raidissement verticale qui est située transversalement par rapport à la direction de déplacement du curseur (20) et dans laquelle débouche le bord de raidissement (20t').

## Claims

1. Linear potentiometer for position measurement, in particular for controlling the relative movement between two component parts (I; II) of an injection moulding machine, for example a plastics injection moulding machine, including a metal tubular profiled member of approximately rectangular cross-section, which is securable to one component part (I in Figs. 1 and 5) and serves as a housing (10), which has a longitudinal slot (10d) disposed symmetrically with respect to a vertical plane of symmetry in its upper wall, a slide (20) which is connectable via a joint (G) to the other component part (II in Fig. 6) and which carries the voltage-scanning wiper (12), said slide being slidably supported on guide shoulders (10a, 10b, 10c in Figs. 1, 5) of the housing (10) by means of spaced horizontal guide ribs (20a), and a covering band (15) of spring steel, which rests on the upper wall of the housing (10) to cover the longitudinal slot (10d) and is retained with the aid of permanent magnets (16) of the housing (10), wherein a slide body (20c), which connects the guide ribs (20a), extends upwardly through the longitudinal slot (10d) in the middle section (a—a in Figs. 1, 6, 8, 9) and forms above the longitudinal slot (10d) a horizontal anchoring plate (20t), which extends crosswise to the plane of symmetry, for the joint (G), which is at last partially traversable by the covering band (15), characterised in that walls (20i, 20p) for a chamber (20l) for accommodating the joint (G) are moulded onto the anchoring plate (20t), which is formed from a highly polymeric material, the anchoring plate (20t) has at least one through-opening (20n) for the covering band (15), which through-opening (20n) is defined, on one side, by a wall of the chamber (20l) and, on the other side, by a middle section (a—a in Fig. 8) of the anchoring plate (20t) corresponding to the through-region, wherein the guide ribs (20a), which are formed from a highly polymeric material, are integral with the anchoring plate (20t).

2. Linear potentiometer according to claim 1, characterised in that the anchoring plate (20t) is extended at both ends beyond the through-region in the sliding direction of the slide and, in each of the extended portions (20u, 20v), is provided with a respective through-opening (20n) for the covering band (15) (Figs. 8, 9).

3. Linear potentiometer according to claim 2, characterised in that the anchoring plate is extended at both ends into the regions of the guide ribs (20a) and is provided with a circumferential reinforcing rim (20f), the walls (20i, 20p) for the chamber (20l) being moulded onto the free end of one extended portion (20v).

4. Linear potentiometer according to claim 3, characterised in that the vertical walls (20i, 20p) protrude upwardly beyond the vertical reinforcing rim (20f), and the rear chamber wall (20p) is reinforced with a hardened joint plate (25), which is retained in vertical guide grooves formed in the chamber wall (20p) and against which the end (22b) of a connecting bolt (22), which extends with play through the front chamber wall (20i), abuts by the action of a biased helical spring (23).

5. Linear potentiometer according to claim 4, characterised in that the helical spring (23) is supported on a support disc (24), which surrounds the connecting bolt (22) with play and is supported on a radial flange of the connecting bolt (22), and on the chamber wall (20i) and is seated on a horizontal, longitudinally extending rib (20r) of the chamber base.

6. Linear potentiometer according to one of claims 3—5, characterised in that the front chamber wall (20i) and the front edge of the adjacent guide rib (20a) are located in a common vertical plane.

7. Linear potentiometer according to one of the preceding claims, characterised in that the slide body (20c) is formed by a vertical, trapezoidal-shaped plate which is provided with a reinforcing rim (20c') which, in turn, forms the securing surface (20b) for the wiper (12) and, beginning at both ends of said securing surface, widens in the longitudinal direction of the slide to match the width of the guide ribs (20a).

8. Linear potentiometer according to one of claims 3—7, characterised in that the anchoring plate (20t) is covered by means of a cover (21), which surrounds a roof-like region (21b) for covering the chamber (20l) and a plate-like region (21a), and which is connectable to the anchoring plate (20t) by means of tongues (21c), which are engageable in indentations (20g) formed in the reinforcing rim (20f), and said plate is centerable on walls (20p) of the chamber 20l by means of supporting ribs (21d in Figs. 1, 7, 10).

9. Linear potentiometer according to claim 8, characterised in that a guide rib (21e) for the covering band (15) is moulded onto the underside of the cover (21) in the plane of symmetry, the guide edge (21e') of said rib having a middle, horizontal section and circular-arc-like end sections, a sliding rib (20e) which extends vertically relative to the direction of travel of the slide (20) being moulded onto the middle of the anchoring plate (20t).

10. Linear potentiometer according to one of the preceding claims, characterised in that the guide ribs (20a) have a U-shaped cross-section and are provided with a vertical reinforcing wall located crosswise to the direction of travel of the slide (20) and into which the reinforcing rim (20t') extends.

FIG.1

FIG.2

FIG.3

FIG.4

1

FIG.5

FIG.6

FIG.7

FIG.8

FIG.9

FIG.10

21a

21

21b

21c

21c

21d

21c

20f

20g

20h

20d

20n

20

20h

20e

20m

20l

20a′′′

20k

20a

20i

20a′′

20t

20a IV

20a′

20c

20b

FIG.11

20a′′′

20p

20a

20a′′

20a′

4